# EUROPEAN PATENT SPECIFICATION

(11) **EP 1 673 977 B1**
(45) Date of publication and mention of the grant of the patent: **16.07.2008**
(21) Application number: 04030416.4
(22) Date of filing: 22.12.2004
(51) Int. Cl.: A23G 1/00, A23G 7/02, A23G 1/18

(54) **Rapid development of heat resistance in chocolate and chocolate-like confectionery products**
Schneller Wärmewiderstandsaufbau in Schokoladen oder schokoladenähnlichen Süsswaren
Développement rapide de la résistance thermique dans les produits de confiserie au chocolat ou de type chocolat

(43) Date of publication of application: 28.06.2006
(73) Proprietor: Kraft Foods R & D, Inc. Zweigniederlassung München, 81737 München (DE)
(72) Inventor: Simbürger, Stephan, 81375 München (DE)
(74) Representative: Morf, Jan Stefan

(56) References cited:
- CH-A- 647 930
- US-A- 4 045 583
- US-A- 5 041 296
- US-A- 5 149 560
- US-A- 5 160 760
- US-A- 5 232 734

## Description

### FIELD OF THE INVENTION

The present invention relates to a process for manufacturing heat-resistant chocolate or chocolate-like confectionery products and the products obtainable thereby.

### BACKGROUND OF THE INVENTION

Conventional chocolate products cannot be stored or transported at temperatures of about 30°C without becoming soft and sticky.

Many different attempts have been made to increase the heat stability of chocolate, such as the use of high-melting oils and fats or the use of substances which improve the integrity of the chocolate structure at higher temperatures.

Promising suggestions have been made with regard to the incorporation of water. Regular chocolate contains about 1% by weight water and the incorporation of additional water increases the heat stability of chocolate.

U.S. Patent 5,160,760 describes a heat-resistant chocolate and a process for making same, wherein the chocolate consists essentially of a mixture of a water-in-oil emulsion and a chocolate base material, wherein the mixture contains an emulsifying agent and wherein a water-soluble material selected from saccharides and sugar alcohols is dissolved in the aqueous phase of the water-in-oil emulsion prior to mixing it with the chocolate base material.

U.S. Patent 5,486,376 describes a similar process, wherein the water-in-oil emulsion is a microemulsion wherein water is present in the form of droplets having a size of 10 to 1000 Å.

U.S. Patent 6,165,540 describes another similar process comprising the preparation of a water-in-oil emulsion and the addition of a molten chocolate composition to the emulsion, and mixing the added molten chocolate composition and the emulsion so that destruction of the emulsion is substantially avoided and so that during the adding and mixing, the molten chocolate composition is added and the added molten chocolate composition and emulsion are mixed to obtain a chocolate mass product which comprises a fatty phase and contains water in the form of droplets distributed in the fatty phase and which contains the water in an amount of from 1% to 40% by weight.

All these processes lead to an increase in the heat stability of the obtained chocolate products, however this property is not obtained immediately after shaping. U.S. Patent 5,160,760 reports in lines 59 to 63 of column 4 that the increase in heat resistance depends on time and is achieved by storing the products for about 20 days.

The object of the present invention is to provide a process which allows chocolate or chocolate-like confectionery products with increased heat resistance to be obtained immediately after the manufacturing process.

### SUMMARY OF THE INVENTION

The present invention relates to a process for manufacturing heat-resistant chocolate or chocolate-like confectionery products wherein
(i) conventional tempered chocolate mass or chocolate-like confectionery mass which has been mixed with a water-in-oil emulsion, or
(ii) conventional tempered chocolate mass or chocolate-like confectionery mass having an increased water content
is moulded and then subjected to a microwave treatment prior to and/or during cooling. The heat resistance is developed instantaneously and the obtained product can be subjected to temperatures of up to about 45°C without losing its form.

### DETAILED DESCRIPTION OF THE INVENTION

It was surprisingly found within the present invention that the heat resistance of water-containing chocolate can be developed instantaneously by subjecting the chocolate mass to a microwave treatment after shaping the water-containing chocolate mass and during and/or prior to cooling. There is no need to store the chocolate product for days or weeks in order to develop heat resistance. The products obtained by the process according to the present invention can be subjected to temperatures of up to about 45°C immediately after their manufacture without losing their form.

Any conventional tempered chocolate mass can be used within the present invention. However, it is important that the chocolate mass contains water. To this end the tempered chocolate mass already has an increased water content or is combined with a water-in-oil emulsion including an emulsifying agent.

The water-in-oil emulsion generally consists of water, oils and/or fats, hydrophilic substances and at least one emulsifying agent, the water content being about 20 to 70% by weight.

Many different oils and/or fats can be used to perform the invention especially for chocolate-like confectionery products where ordinary vegetable oils, in particular soy bean oil, can be used. Useful oils and fats are for example described in U.S. Patent 5,160,760. The preferred material is cocoa butter and the preferred amount of oils and/or fats is about 20 to 60% by weight.

Hydrophilic substances which can be used within the present invention are for example saccharides and sugar alcohols, sorbitol being a preferred substance. The hydrophilic substances should preferably be present within the water-in-oil emulsions in an amount of about 30 to 75% by weight.

The emulsifying agent which is preferably present in an amount of about 1 to 5% by weight can be selected from emulsifiers known in this field. Preferred are all types of lecithins, fatty acid esters, polyglycerol-condensed ricinoleic acid ester (PGPR).

The water-in-oil emulsion is prepared by adding and mixing the ingredients in the presence of the emulsifier in a conventional mixing apparatus at a temperature of about 30° to 70°C by adding oil and/or fat and the emulsifier first and water and/or water containing the hydrophilic substance next while stirring at a medium to high mixing speed. The mixing speed should be such that the water droplet size will be in the range of about 1 to about 10 *µ*m, preferably about 3 to about 5 *µ*m.

The water-in-oil emulsion and conventional tempered chocolate mass, both at a temperature of about 30°C, are then mixed in a weight ratio of about 5 to 15% by weight of the emulsion to about 95 to 85% by weight of chocolate mass. The preferred ratio is about 10% by weight to about 90% by weight. The mixing is carried out for about 1 to 3 minutes.

The conventional tempered chocolate mass having an increased water content or the obtained mixture of the conventional tempered chocolate mass and the water-in-oil emulsion has a fat content of about 27 to 35% by weight and a water content of about 1.5 to 7.0% by weight. The mixture has an emulsifier content of about 0.5 to 1.5% by weight.

The chocolate mass or the mixture is then poured at a temperature of about 30°C into a mould held at about the same temperature and agitated by a vibration system or the like in order to evenly distribute the mixture in the mould before it starts to firm up.

Prior to and/or during cooling, the chocolate mass is subjected to a microwave treatment in order to rapidly develop heat resistance. Any conventional microwave source can be used. For example, a conventional 3.3-kW microwave oven or larger scale microwave tunnel is appropriate. Any frequency suitable for heating purposes is appropriate whereby the preferred frequencies are 2.45 GHz and 5.8 GHz. The distance between microwave source and chocolate mass is typically about 10 cm. The microwave treatment can be applied from the top and/or bottom but preferably alternately. The energy density induced by the magnetrons to ensure immediate heat resistance is in the range of about 66 to about 1085 kJ/kg whereby higher energy density values reduce the processing time from a few minutes to about 40 to 50 seconds.

The chocolate or chocolate-like confectionery product is demoulded and packaged after the microwave treatment and cooling.

The obtained chocolate product, which is perferably a chocolate tablet, a filled chocolate tablet, a praline, an enrobed chocolate product, etc., has an increased heat resistance immediately after the microwave treatment and can be exposed for prolonged times to temperatures of up to about 40°C and even up to about 45°C without losing its form.

The fact that it is not neccessary according to the present invention to store the obtained chocolate products for days and weeks in order to develop heat resistance is a great advantage because it shortens the production time enormously.

The invention will now be illustrated by specific examples which describe preferred embodiments of the present invention. They are not intended to limit the scope of the invention.

### EXAMPLES

### Example 1

Ingredients for cocoa confections of the "milk", and "white" types according to Table 1 were mixed and refined to the particle size as shown in Table 1. The refined flakes were mixed with the additional ingredients according to Table 2 in a Stephan Mixer.

The masses were then blended with an emulsion prepared according to Table 3 in the ratios shown in Table 4 and moulded in hemispheres (diameter 22 mm). The moulded products were subjected to a microwave treatment (10 s, full power in a Gigatherm Mammut oven).
• The "milk" product with erythritol had a fudge-like texture.
• The "milk" product with xylitol was a firm body.
• The "white" product appeared as a solid body.
• Both samples with xylitol exhibited a significant cooling sensation (stronger than in conventional chocolate) while no significant cooling sensation was perceived with the erythritol sample.

**Table 1**

| | Ingredient dosage [g] | | |
|---|---|---|---|
| | "milk" type | "milk" type | "white" type |
| **Cocoa powder 10/12** | 189.8 | 126.5 | |
| Erythritol | 1498.7 | | |
| Xylitol | | 999.1 | 949.3 |
| Lactose | | | 144.4 |
| Skim milk powder | 409.8 | 273.2 | 210.7 |
| Anhydrous milk fat | 146.5 | 97.6 | 78.2 |
| Sweet whey powder | 154.6 | 103.0 | 195.8 |
| Vanillin | 0.3 | 0.2 | 2.1 |
| Soya oil | 600.4 | 400.3 | 419.4 |
| Particle size D90 [*µ*m] | 27.8 | 24.7 | 26.7 |

**Table 2**

| | Ingredient dosage [g] | | |
|---|---|---|---|
| | "milk" type | "milk" type | "white" type |
| **Refined flakes** | 2796.0 | 1864.0 | 1885.0 |
| Hazel nut paste | 30.0 | 20.0 | |
| Soya oil | 153.3 | 102.2 | 105.2 |
| Lecithin | 20.7 | 13.8 | 9.8 |

**Table 3**

| | Ingredient dosage [g] | | |
|---|---|---|---|
| | "milk" type | "milk" type | "white" type |
| **Soya oil** | 52.5 | 52.5 | 52.5 |
| Sorbitol syrup (70%) | 137.5 | 137.5 | 137.5 |
| Polyglycerol-Polyrhinicoleate | 10.0 | 10.0 | 10.0 |

**Table 4**

| | Component dosage [g] | | |
|---|---|---|---|
| | "milk" type | "dark" type | "white" type |
| Confectionery base | 225.0 | 225.0 | 225.0 |
| Emulsion | 25.0 | 25.0 | 25.0 |
| Microwave treatment | 10 s / full power | 10 s / full power | 10 s / full power |

### Example 2

### Production of a heat-resistant 100-g chocolate tablet

A water-in-oil emulsion was prepared comprising 26.4% cocoa butter, 70.6% sorbitol (30% moisture) and 3.1% PGPR. This emulsion was mixed with tempered chocolate in a ratio of 9.7% emulsion and 90.3% chocolate. The mixture was poured into a tablet mould and treated on a vibration table until evenly distributed. Prior to cooling the mould was placed in a conventional 3.3-kW microwave oven for 50 seconds. After cooling, the tablet was demoulded and subjected to 40°C temperature abuse conditions. Relative to a non-microwave-treated tablet made in the same manner, the microwave-treated tablet was superior in retaining its form.

## Claims

1. Process for manufacturing heat-resistant chocolate wherein
(i) conventional tempered chocolate mass which has been mixed with a water-in-oil emulsion, or
(ii) conventional tempered chocolate mass having an increased water content
is moulded and then subjected to a microwave treatment prior to and/or during cooling.

2. Process according to claim 1, wherein the water content of the chocolate mass is about 1.5 to about 7.0% by weight before moulding.

3. Process according to claims 1 or 2, wherein the heat-resistant chocolate product is a chocolate tablet, a filled chocolate tablet, a praline, an enrobed chocolate product.

4. Process according to any one of claims 1 to 3, wherein the induced microwave radiation of the microwave treatment is within a range of about 66 to about 1085 kJ/kg.

5. Process according to any one of claims 1 to 4, wherein the moulded chocolate mass has a temperature of about 30°C when it is subjected to the microwave treatment.

6. Chocolate confectionery products, obtainable by the process of any one of claims 1 to 5.

## Patentansprüche

1. Verfahren zur Herstellung von wärmebeständiger Schokolade, wobei
(i) herkömmliche temperierte Schokoladenmasse, die mit einer Wasser-in-Öl-Emulsion vermischt wurde, oder
(ii) herkömmliche temperierte Schokoladenmasse mit einem erhöhten Wassergehalt
geformt und anschließend vor und/oder während dem Abkühlen einer Mikrowellenbehandlung unterzogen wird.

2. Verfahren gemäß Anspruch 1, wobei der Wassergehalt der Schokoladenmasse vor dem Formen etwa 1,5 bis etwa 7,0 Gew.-% beträgt.

3. Verfahren gemäß den Ansprüchen 1 oder 2, wobei das wärmebeständige Schokoladenprodukt eine Schokoladentafel, eine gefüllte Schokoladentafel, eine Praline, ein umhülltes Schokoladenprodukt ist.

4. Verfahren gemäß irgendeinem der Ansprüche 1 bis 3, wobei die induzierte Mikrowellenstrahlung der Mikrowellenbehandlung innerhalb eines Bereichs von etwa 66 bis etwa 1085 kJ/kg liegt.

5. Verfahren gemäß irgendeinem der Ansprüche 1 bis 4, wobei die geformte Schokoladenmasse eine Temperatur von etwa 30°C besitzt, wenn sie der Mikrowellenbehandlung unterzogen wird.

6. Schokoladen-Süßwarenprodukte, die durch das Verfahren nach irgendeinem der Ansprüche 1 bis 5 erhalten werden können.

## Revendications

1. Procédé de fabrication de produits de confiserie au chocolat, présentant une résistance thermique, dans lequel :
(i) une masse de chocolat conditionnée thermiquement, classique, ayant été mélangée à une émulsion eau-dans-l'huile, ou
(ii) une masse de chocolat conditionnée thermiquement, classique, présentant une teneur en eau augmentée,
est moulée et ensuite soumise à un traitement aux micro-ondes, avant et/ou pendant le refroidissement.

2. Procédé selon la revendication 1, dans lequel la teneur en eau de la masse de chocolat est d'environ 1,5 à 7,0 % en poids avant le moulage.

3. Procédé selon la revendication 1 ou 2, dans lequel le produit au chocolat à résistance thermique est une tablette de chocolat, une tablette de chocolat fourré, une praline, un produit au chocolat enrobé.

4. Procédé selon l'une quelconque des revendications 1 à 3, dans lequel le rayonnement à micro-ondes induit du traitement aux micro-ondes est compris dans une fourchette d'environ 66 à environ 1085 kJ/kg.

5. Procédé selon l'une quelconque des revendications 1 à 4, dans lequel la masse de chocolat moulé présente une température d'environ 30°C lorsqu'elle est soumise au traitement aux micro-ondes.

6. Produits de confiserie au chocolat, pouvant être obtenus par le procédé selon l'une quelconque des revendications 1 à 5.
